# EUROPÄISCHE PATENTANMELDUNG

(11) **EP 1 097 886 A1**
(43) Veröffentlichungstag der Anmeldung: **09.05.2001**
(21) Anmeldenummer: 00123152.1
(22) Anmeldetag: 25.10.2000
(51) Int. Cl.: B65G 21/20

(54) **Bandförderer und Beschicker**

(30) Priorität: 02.11.1999 DE 29919242 U
(71) Anmelder: Joseph Vögele AG, D-68146 Mannheim (DE)
(72) Erfinder: Grundl, Roland, Dipl-Ing., 69253 Heiligkreuzsteinach (DE)
(74) Vertreter: Grünecker, Kinkeldey, Stockmair & Schwanhäusser Anwaltssozietät

(57) **Zusammenfassung**

Es wird Bandförderer (B) für haftfreudiges und/oder erstarrendes Material, insbesondere eines Beschickers für bituminöses oder Beton-Einbaugut, mit einem Förderband (A), dessen Fördertrum (F) beidseitig Seitenwände (S) zugeordnet sind, die mit der Oberseite des Fördertrums jeweils einen Dichtspalt (C) begrenzen, beschrieben, der zumindest für den an den Dichtspalt (C) angrenzenden Rand (R) jeder Seitenwand (S) eine Verstellvorrichtung (V) zum Öffnen des Dichtspalts besitzt.

## Beschreibung

Die Erfindung betrifft einen Bandförderer der im Oberbegriff des Anspruchs 1 angegebenen Art sowie einen Beschicker gemäß Oberbegriff des nebengeordneten Anspruchs 11.

Bandförderer für haftfreudiges und/oder erstarrendes Material weisen, z.B. bei hohen Durchsatzraten und/oder nennenswertem Anstieg, den Förderkanal begrenzende, nicht mitlaufende Seitenwande auf. Jede Seitenwand begrenzt mit der Oberseite des Fördertrums einen Dichtspalt, der verhindern soll, dass gefördertes Material unter den Seitenwanden hindurch nach außen dringt. Beschicker, die Straßenfertiger mit bituminösem oder gegebenenfalls auch Beton-Einbaugut versorgen, haben in der Regel wenigstens einen Bandförderer mit Seitenwänden. Wird ein solcher Bandförderer abgestellt, beispielsweise bei einem Beschicker für eine Arbeitsunterbrechung oder während der Nacht, dann haftet das haftfreudige und/oder beim Abkühlen erstarrende Material beim und im Dichtungsspalt sowohl am Fördertrum als auch an der Seitenwand an. Denn eine vollständige Reinigung dieser Bereiche ist mit vertretbarem Aufwand nicht möglich. Es stellt sich eine festhaltende Verklebung ein, die das neuerliche Anlaufen des Bandförderers blockieren kann oder zu Schäden führt.

Der Erfindung liegt die Aufgabe zugrunde, einen Bandförderer sowie einen Beschicker anzugeben, bei denen Betriebsstörungen durch Verkleben der Seitenwände mit dem Fördertrum auf baulich einfache Weise vermeidbar sind.

Die gestellte Aufgabe wird mit den Merkmalen des Anspruchs 1 und den Merkmalen des Anspruchs 11 gelöst.

Indem die Seitenwände wahlweise relativ zur Oberseite des Fördertrums verstellt werden, um die Dichtspalte zu öffnen bzw. zumindest erheblich zu vergrößern, haben Reste selbst stark haftenden Materials keine Möglichkeit mehr, das Fördertrum mit den Seitenwänden zu verkleben. Auch nach langer Stillstandszeit läuft der Bandförderer ordnungsgemäß an. Die Verstellbarkeit der Seitenwände hat ferner den Vorteil, das Maß des Dichtspalts auf das geförderte Material einstellen zu können.

Beim Beschicker lassen sich die Seitenwände relativ zum Fördertrum und nach Arbeitsende so weit verstellen, dass nicht oder kaum zu beseitigende Materialreste zu keiner Verklebung der Dichtspalte mehr führen. Der Bandförderer des Beschickers läuft nach langen Stillstandszeiten problemlos an, selbst wenn zuvor extrem haftendes Bitumen-Material gefördert wurde.

Zweckmäßig wird der Rand aus der Betriebsstellung in eine abgehobene Passivstellung verstellt, in der das Verkleben zuverlässig vermieden wird.

Für die gewünschte Sicherheitsfunktion reicht es aus, nur einen Abschnitt der Seitenwand entsprechend zu verstellen, was mit geringem Kraftaufwand möglich ist.

Alternativ kann jedoch die gesamte Seitenwand vom Fördertrum wegbewegt werden.

Dabei bietet es sich an, die Seitenwand bzw. den Abschnitt der Seitenwand wegzuschwenken oder wegzuschieben oder in einer kombinierten Schwenk/Schiebestellung vom Fördertrum wegzubewegen. Für diesen Zweck kann eine einfache Schwenklagerung oder eine Schiebelagerung oder eine Schwenk/Schiebelagerung vorgesehen sein. Die Bewegung der Seitenwand bzw. des Abschnittes wird durch eine Antriebs- und Feststelleinrichtung bewirkt, die ggfs. auch die Seitenwand bzw. den Abschnitt der Seitenwand in der jeweiligen Stellung festzulegen vermag.

Zweckmäßigerweise sind die Seitenwände und auch die Antriebs- und Feststelleinrichtungen sowie die Lagerungen an Chassisseitenteilen des Bandförderers abgestützt.

Wenn jede Seitenwand um eine zum Fördertrum in etwa parallele Schwenkachse nach innen oder nach außen geschwenkt wird, hebt sich ihr unterer, normalerweise den Dichtspalt begrenzender Rand weit genug vom Fördertrum ab. Dabei können sogar im Dichtspalt vorliegende Materialreste verstrichen werden, so dass die Seitenwand nach Beendigung der Arbeitspause problemlos wieder in die Betriebsstellung zurückschwenken kann. Als Antriebe sind pneumatische oder hydraulische Zylinder zweckmäßig. Es kann jedoch auch ein Schwenkaktuator eingesetzt werden, oder eine mechanische, ggfs. manuell zu bedienende Verstellvorrichtung.

Alternativ wird die Seitenwand bzw. der Abschnitt der Seitenwand in einer Linearführung relativ zum Fördertrum verstellt. Hierfür kann ein hydraulischer oder pneumatischer Zylinder oder ein Aktuator eingesetzt werden. Es ist auch möglich, eine einfache mechanische Verstelleinrichtung zu benutzen.

Zweckmäßig wird eine Art Lenkerparallelogramm zur Bewegungsführung der Seitenwand bzw. des Abschnitts der Seitenwand eingesetzt. Dadurch lässt sich eine ziehende und anschließend hochschwenkende oder anhebende Bewegung des Randes erzeugen, bei der Materialreste gut verstrichen werden. Gegebenenfalls senkt sich der Rand am Beginn der Bewegung zwischen der Betriebsstellung und der Passivstellung sogar bis auf die Oberseite des Fördertrums ab, um diesen Bereich für die spätere Rückstellung der Seitenwand bzw. des Abschnittes der Seitenwand intensiv zu säubern.

Zweckmäßigerweise wird der Rand der Seitenwand bis auf das drei- bis zehnfache Maß des Dichtspalts abgehoben.

Anhand der Zeichnung werden Ausführungsformen des Erfindungsgegenstandes erläutert. Es zeigen:
- Fig. 1A: die linke Hälfte eines Querschnitts eines Bandförderers, z.B. eines Beschickers,
- Fig. 1B: die rechte Hälfte eines Querschnitts eines anders ausgebildeten Bandförderers, z.B. eines Beschickers, und
- Fig. 2: einen Teilquerschnitt einer weiteren Ausführungsform eines Bandförderers, wie er für einen Beschicker verwendbar ist.

Ein Bandförderer B, wie er beispielsweise in einem nicht gezeigten Beschicker installiert ist, weist zwischen Chassisseitenteilen 1 drehbare Tragrollen 2 für ein Förderband A, beispielsweise einen Gummifördergurt, auf, dessen Fördertrum F von den Tragrollen 2 abgestützt ist. Die Laufbewegung des Förderbands A wird durch nicht gezeigte Antriebs- bzw. Umlenktrommeln in der Förderbandschlaufe erzeugt.

Der Bandförderer dient beispielsweise zum Fördern haftfreudigen und/oder aushärtenden Materials, wie beispielsweise bituminösem oder Beton-Einbaugut zur Straßendeckenherstellung. Dieses Material hat neben seiner Fähigkeit, anzuhaften und zu erstarren oft, eine meist zähflüssige oder teigige Konsistenz. Es sind, u.a. da das Material mit gegebenenfalls hoher Förderrate und schräg aufwärts oder abwärts gefördert wird, und zwar über beträchtliche Wegstrecken, oberhalb des Fördertrums F beidseitig Seitenwände S vorgesehen, die sich gerade oder schräg stehend oder gewölbt vom Fördertrum F nach oben erstrecken. Jede Seitenwand S begrenzt mit ihrem unteren Rand R einen Dichtspalt C mit dem Fördertrum F, der verhindern soll, dass das Material oder flüssige Bestandteile des Materials, zumindest in einem exzessiven Ausmaß, unter der jeweiligen Seitenwand S nach außen dringt bzw. dringen.

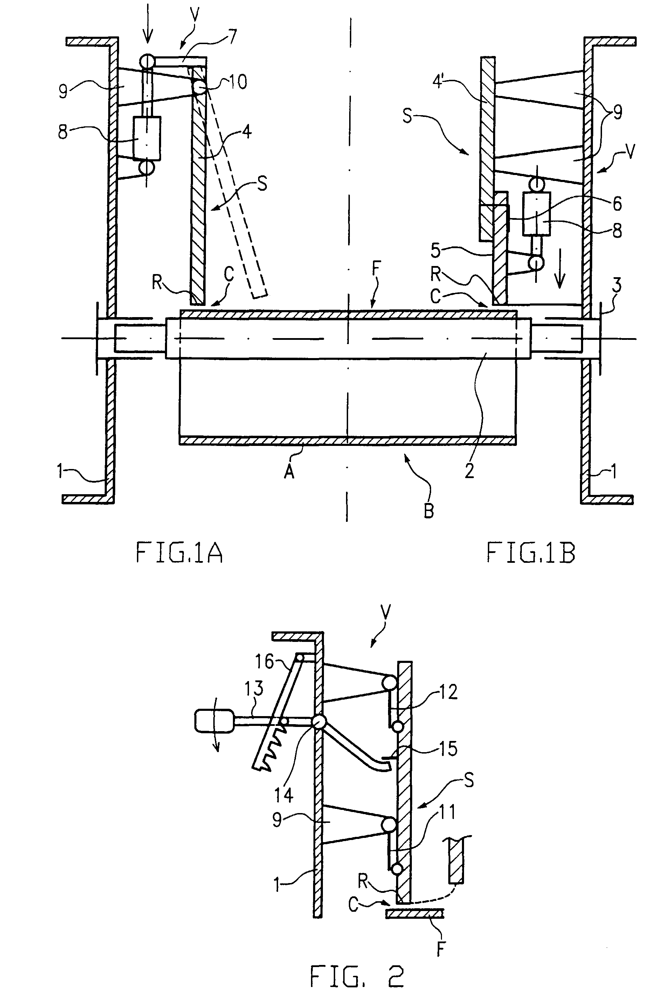

Bei den beiden, in den Fig. 1A und 1B gezeigten Ausführungsformen ist jede Seitenwand S am Chassisseitenteil 1 angebracht, und zwar in der in ausgezogenen Linien gezeichneten Betriebsstellung, in der der Dichtspalt C definiert ist.

In Fig. 1A ist die Seitenwand an einer Schwenklagerung 10 mit annähernd zum Fördertrum F paralleler Schwenkachse angelenkt, wobei die Schwenklagerung 10 über Abstützungen 9 am Chassisseitenteil 1 verankert sein kann. Eine Verstellvorrichtung V dient dazu, die Seitenwand S in Fig. 1A aus der gezeigten Betriebsstellung in die gestrichelt angedeutete Passivstellung zu verschwenken, in der der Rand R von der Oberseite des Fördertrums F genügend weit abgehoben ist, um ein Verkleben des Dichtspaltes und damit eine kraftschlüssige Verbindung zwischen dem Fördertrum und der Seitenwand zu verhindern. In der Verstellvorrichtung V ist wenigstens ein Schwenkzylinder 8 am Chassisseitenteil 1 abgestützt und an Hilfshebeln 7 angelenkt, die mit der Seitenwand S verbunden ist. Die Seitenwand ist beispielsweise als durchgehende Platte 4 ausgebildet.

In Fig. 1A ist angedeutet, dass die Seitenwand S aus der Betriebsstellung nach innen in Richtung zur Mitte des Bandförderers B verschwenkbar ist. Alternativ wäre es möglich, die Seitenwand in der Gegenrichtung nach außen zu verschwenken, um den hinsichtlich Verklebens kritischen Dichtspalt zu öffnen bzw. zu beseitigen, solange der Bandförderer steht.

Der Schwenkzylinder 8 könnte ein Hydraulik- oder Pneumatikzylinder oder ein anderer Schwenkaktuator sein. Ferner ist es denkbar, eine mechanische Verstellrichtung V vorzusehen.

In der Ausführungsform der Fig. 1B besteht die Seitenwand aus einem oberen, über Abstützungen 9 am Chassisseitenteil 1 festgelegten, z.B. plattenförmigen, Abschnitt 4' und einem unteren, ebenfalls plattenförmigen Abschnitt 5, der mit seinem unteren Rand R in der gezeigten Betriebsstellung den Dichtspalt C begrenzt. Der Abschnitt 5 ist beispielsweise in einer Linearführung 6 am oberen Abschnitt 4' auf- und abverschiebbar gehalten, wobei die Schiebeführung 6 gegebenenfalls als Anschlag zum Definieren der Betriebsstellung des unteren Abschnittes 5 dient. Ein Schiebezylinder 8, z.B. ein Hydraulik- oder Pneumatikzylinder oder ein Schiebeaktuator, ist an einer Abstützung 9 angelenkt und beaufschlagt den Abschnitt 5, um den Abschnitt 5 aus der gezeigten Betriebsstellung in die gestrichelt angedeutete Passivstellung anzuheben und den Dichtspalt C zu öffnen bzw. zu beseitigen. Die Verstellvorrichtung V in Fig. 1B könnte auch am Chassisseitenteil 1 direkt angreifen. Ferner ist es denkbar, den Abschnitt 5 ähnlich wie in Fig. 1A relativ zum oberen Abschnitt 4' zu verschwenken. Umgekehrt ist es möglich, die einteilige Platte 4 der Seitenwand S in Fig. 1A in einer Schiebeführung analog zur Linearführung 6 nach oben zu verstellen.

In der Ausführungsform in Fig. 2 ist die hier einteilig gezeigte Seitenwand S mittels der Verstellvorrichtung V mit einem speziellen Bewegungsablauf aus der Betriebsstellung unter Definition des Dichtspalts C in die angehobene oder weggeschwenkte Passivstellung bewegbar. Und zwar ist die Seitenwand S mit einer Art Lenkerparallelogramm am Chassisseitenteil 1 gehalten, bestehend aus an den Abstützungen angreifenden Lenkern 11, die in Schwenkstellen 12 an der Seitenwand S gelagert sind. Durch das Lenkerparallelogramm wird der untere Rand R der Seitenwand S zunächst über das Fördertrum F gezogen und erst dann angehoben. Bei der ziehenden Bewegung kann der Rand sogar kurzfristig auf dem Fördertrum F aufsetzen, um dort haftende Materialreste zu verstreichen oder wegzustreifen.

Die Verstellvorrichtung V weist hier einen in einem Schwenklager 14 am Chassisseitenteil 1 gelagerten Hebel 13 auf, der an einem Vorsprung 15 der Seitenwand S angreift. Eine Sperrklinke 16 ermöglicht das Feststellen der angehobenen Seitenwand. Die Abstützungen 9 am Chassisseitenteil 1 können hier auch dazu dienen, die Betriebsstellung der Seitenwand zu definieren.

Bei allen gezeigten Ausführungsformen kann die Verstellvorrichtung V ggfs. auch dazu benutzt werden, die Größe oder das Maß des Dichtspaltes C auf das jeweils geförderte Material abzustimmen, d.h. etwas zu vergrößern oder zu verkleinern.

Ehe der Bandförderer B abgestellt wird, wird die Zufuhr an Material unterbrochen. Zur gleichen Zeit oder nacheilend werden die Seitenwände S aus ihren Betriebsstellungen in die Passivstellungen verstellt. Gegebenenfalls werden die Seitenwände, die Ränder und die Oberseite des Förderbandes A dann gereinigt. Ehe der Bandförderer B wieder in Betrieb genommen wird, werden zunächst die Seitenwände S wieder in die Betriebsstellungen gebracht und erst danach wieder zu förderndes Material zugeführt.

Auf welche Weise bei dem erfindungsgemäßen Bandförderer die Seitenwände in die Passivstellung gebracht werden, ist von sekundärer Bedeutung. Wesentlich ist, dass sich der in der Betriebsstellung gegebene und erforderliche Dichtspalt, mit dem die Oberseite des Förderbands nahe der Seitenwand bzw. dem Rand der Seitenwand steht, öffnen bzw. beseitigen lässt, sobald beabsichtigt ist, den Bandförderer zumindest solange anzuhalten, wie das geförderte Material zum Aufbauen einer Klebeverbindung braucht.

## Patentansprüche

1. Bandförderer (B) für haftfreudiges und/oder erstarrendes Material, insbesondere eines Beschickers für bituminöses oder Beton-Einbaugut, mit einem Förderband (A), dessen Fördertrum (F) beidseitig Seitenwände (S) zugeordnet sind, die mit der Oberseite des Fördertrums jeweils einen Dichtspalt (C) begrenzen, **dadurch gekennzeichnet**, dass zumindest für den an den Dichtspalt (C) angrenzenden Rand (R) jeder Seitenwand (S) eine Verstellvorrichtung (V) zum Öffnen des Dichtspalts vorgesehen ist.

2. Bandförderer nach Anspruch 1, **dadurch gekennzeichnet**, dass der Rand (R) der Seitenwand (S) aus einer den Dichtspalt (C) begrenzenden Betriebsstellung in eine von der Oberseite des Fördertrums (F) abgehobene Passivstellung verstellbar ist.

3. Bandförderer nach Anspruch 1, **dadurch gekennzeichnet**, dass nur ein Abschnitt (5) der Seitenwand (S) mit seinem den Dichtspalt begrenzenden Rand (R) relativ zu einem darüberliegenden Seitenwandabschnitt (4') verstellbar ist.

4. Bandförderer nach Anspruch 1, **dadurch gekennzeichnet**, dass die ganze Seitenwand (S) verstellbar ist.

5. Bandförderer nach wenigstens einem der vorhergehenden Ansprüche, **dadurch gekennzeichnet**, dass die Seitenwand (S) bzw. der Abschnitt (5) der Seitenwand (S) in einer Verstelllagerung (10, 6, 9, 11, 12), vorzugsweise einer Schwenk- oder Schiebelagerung oder einer Schwenk/Schiebelagerung, stationär abgestützt und mit einer Antriebs- und Feststelleinrichtung (8, 13, 16) gekoppelt ist.

6. Bandförderer nach wenigstens einem der vorhergehenden Ansprüche, **dadurch gekennzeichnet**, dass beiderseits des Förderbands (A) Chassisseitenteile (1) vorgesehen sind, und dass die Verstelllagerungen und die Antriebs- und Feststelleinrichtungen an den Chassisseitenteilen (1) abgestützt sind.

7. Bandförderer nach Anspruch 5, **dadurch gekennzeichnet**, dass die Schwenklagerung (10) eine zum Fördertrum (F) in etwa parallele Schwenkachse für die Seitenwand (S) aufweist, und dass die Antriebs- und Feststelleinrichtung wenigstens einen direkt oder über einen Umlenkhebel (7) an der Seitenwand (S) bzw. an dem Abschnitt (5) angreifenden hydraulischen oder pneumatischen Schwenkzylinder (8) oder einen Schwenkaktuator aufweist.

8. Bandförderer nach Anspruch 5, **dadurch gekennzeichnet**, dass die Schiebelagerung (6) eine Linearführung für die Seitenwand bzw. den Abschnitt (5) der Seitenwand aufweist, und dass die Antriebs- und Feststelleinrichtung wenigstens einen pneumatischen oder hydraulischen Schiebezylinder (8) oder einen Schiebeaktuator aufweist.

9. Bandförderer nach Anspruch 5, **dadurch gekennzeichnet**, dass die Schwenk/Schiebelagerung der Seitenwand (S) bzw. des Abschnitts (5) der Seitenwand nach Art eines Lenkerparallelogramms ausgebildet ist, an dem die Seitenwand (S) bzw. ihr Abschnitt (5) mit dem Rand (R) zunächst in einer entlang der Oberseite des Fördertrums (F) ziehenden und anschließend abhebenden Bewegung verstellbar ist.

10. Bandförderer nach wenigstens einem der vorhergehenden Ansprüche, **dadurch gekennzeichnet**, dass der Rand (R) bis auf das drei- bis zehnfache Maß des Dichtspalts (C) von der Oberseite des Fördertrums (F) abhebbar ist.

11. Beschicker für bituminöses oder Beton-Einbaugut, mit einem Bandförderer (B), dessen Fördertrum (F) mit ihren Rändern (R) Dichtspalte (C) begrenzende Seitenwände (S) zugeordnet sind, **dadurch gekennzeichnet**, dass die Seitenwände (S) oder zumindest Abschnitte (5) der Seitenwände (S) mittels einer Verstellvorrichtung (V) unter Öffnen der Dichtspalte (C) vom Fördertrum (F) abhebbar sind.
